(19) Europäisches Patentamt
European Patent Office
Office européen des brevets

(11) **EP 4 372 686 A1**

(12) **EUROPEAN PATENT APPLICATION**

(43) Date of publication:
**22.05.2024 Bulletin 2024/21**

(21) Application number: **23209223.9**

(22) Date of filing: **10.11.2023**

(51) International Patent Classification (IPC):
**G06T 7/246** (2017.01)     **G06T 7/269** (2017.01)

(52) Cooperative Patent Classification (CPC):
**G06T 7/246; G06T 7/269;** G06T 2207/30252;
G06T 2207/30261

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022  US 202263424267 P**

(71) Applicant: **Raytheon Technologies Corporation
Farmington, CT 06032 (US)**

(72) Inventors:
• **SUNDARAMOORTHI, Ganesh
East Hartford, CT (US)**
• **HAN, Bing
East Hartford, CT (US)**

(74) Representative: **Dehns
St. Bride's House
10 Salisbury Square
London EC4Y 8JD (GB)**

(54) **OBJECT MONITORING USING EVENT CAMERA DATA**

(57) A method, comprising: obtaining data from an event camera (22) for each of a plurality of time instances, the data including a plurality of events corresponding to changes detected by a corresponding plurality of pixels of the event camera at each time instance; determining temporally regularized optical flow velocities at each time instance, wherein each of the pixels has a respective one of the optical flow velocities at each time instance; determining an optical flow and correspondence of a feature of an object (30) in a field of view of the event camera based on a predetermined relationship between the temporally regularized optical flow velocities at a selected time instance and the temporally regularized optical flow velocities at a subsequent time instance, wherein the feature of the object corresponds to one of the plurality of events at the selected time instance and one of the plurality of events at the subsequent time instance.

40

| OBTAIN DATA FROM AN EVENT CAMERA
FOR A PLURALITY OF TIME INSTANCES | 42 |

| DETERMINE TEMPORALLY REGULARIZED OPTICAL FLOW VELOCITIES FOR
EACH PIXEL OF THE EVENT CAMERA AT EACH TIME INSTANCE | 44 |

| DETERMINE OPTICAL FLOW AND CORRESPONDENCE OF AN OBJECT
FEATURE BASED ON A PREDETERMINED RELATIONSHIP
BETWEEN THE TEMPORALLY REGULARIZED OPTICAL FLOW VELOCITIES
AT A SELECTED TIME INSTANCE AND A SUBSEQUENT TIME INSTANCE | 46 |

**FIG.2**

EP 4 372 686 A1

**Description**

**BACKGROUND**

Object monitoring techniques have multiple uses. For example, autonomous or assisted vehicle navigation includes detecting objects in a vicinity, trajectory or pathway of the vehicle. A variety of technologies have been employed for such object detection including cameras, ultrasound sensors, RADAR detectors and LIDAR detectors.

Event cameras present the potential for advancements in object monitoring because they have a much higher temporal resolution, lower power and higher dynamic range than other types of cameras. Event cameras operate differently than traditional cameras. Event cameras do not output images. Instead, event cameras provide data indicating intensity or illumination brightness changes detected by each pixel of the camera.

One way in which event camera data is being used includes converting the event camera data into an image (frame) and then applying computer vision techniques to process such image data as if it came from a camera that generates image data. This approach suffers from at least two drawbacks; the resulting image data is not accurate and the computer vision techniques are computationally expensive.

**SUMMARY**

An illustrative example method includes obtaining data from an event camera for each of a plurality of time instances. The data includes a plurality of events corresponding to changes detected by a corresponding plurality of pixels of the event camera at each time instance. Temporally regularized optical flow velocities are determined at each time instance. Each of the pixels has a respective one of the optical flow velocities at each time instance. An optical flow of a feature of an object in a field of view of the event camera is determined based on a predetermined relationship between the temporally regularized optical flow velocities at a selected time instance and the temporally regularized optical flow velocities at a subsequent time instance. The feature of the object corresponds to one of the plurality of events at the selected time instance and one of the plurality of events at the subsequent time instance.

The various features and advantages of an example embodiment will become apparent to those skilled in the art from the following detailed description. The drawings that accompany the detailed description can be briefly described as follows.

**BRIEF DESCRIPTION OF THE DRAWINGS**

Figure 1 schematically illustrates selected portions of an example embodiment of a system including an event camera and a computing device that is configured to use the event camera data directly for monitoring an area corresponding to a field of view of the event camera.

Figure 2 is a flowchart diagram summarizing an example method of monitoring an object in the field of view based on the event camera data.

Figure 3 schematically illustrates a determined optical flow of an object according to an example embodiment.

**DETAILED DESCRIPTION**

Embodiments of this invention provide enhanced use of event camera data including the ability to use the event camera directly for monitoring purposes. Temporally regulated optical flow velocities determined directly from the event camera data allow for mapping optical flow of an object in a field of view of an event camera. There is no need to convert the event camera data into images, which allows for increased accuracy and reduced computational complexity.

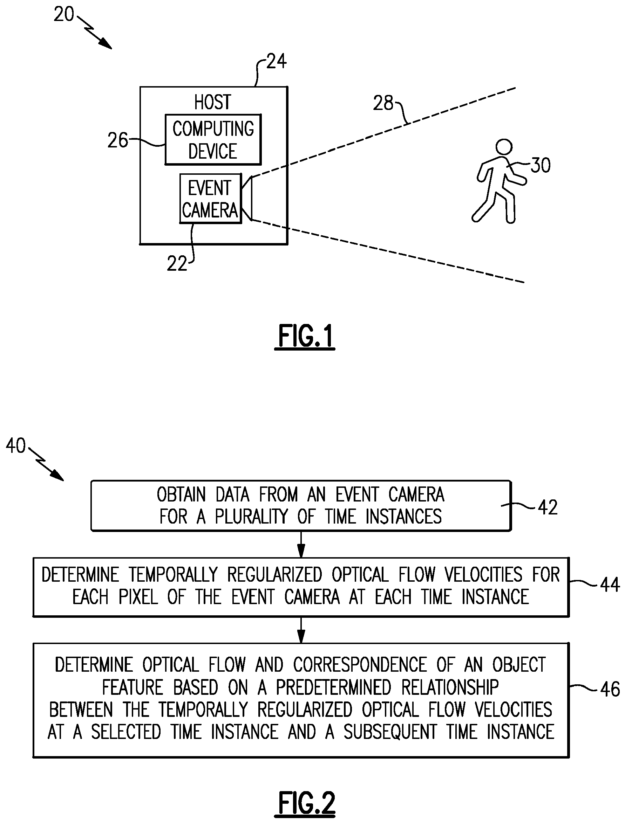

Figure 1 schematically shows a system 20 that includes an event camera 22 that operates in a generally known manner. The event camera 22 includes an array of pixels (not illustrated) that provide an indication of a change in illumination brightness or intensity sensed or detected by each pixel. A change in brightness from a preset baseline that exceeds a threshold results in a pixel output that is referred to as an event. Each pixel output is -1, 0, or 1, when there is a decrease event, no event, or an increase event, respectively.

The event camera 22 has a microsecond resolution and generates output data that indicates which of the pixels detected an event and which did not at a time instance, which can be considered a detection interval.

The event camera 22 is associated with a host 24 that may be a moving object, such as a vehicle, or a stationary object, such as a building or another structure. The manner in which the event camera 22 is associated with the host 24 may vary depending on the particular implementation. For example, the event camera 22 may be mounted or supported on the host. Alternatively, the event camera 22 may be positioned nearby the host 24.

A computing device 26 receives and processes the data from the event camera for monitoring a vicinity of the host 24 corresponding to a field of view 28 of the event camera 22. The computing device 26 includes at least one processor and memory associated with the processor. The computing device 26 may be associated with the event camera 22 and the host 24 in a variety of ways. For example, the computing device 26 may be a dedicated component integral with the event camera 22, a dedicated computing component situated at or on the host 24, a portion of a computing device associated with the host 24 that is useful for additional purposes, or at least a portion of a remotely located device, such as a virtual machine in a cloud computing network. Those skilled in the art that have the benefit of this description will realize what type of computing device 26 will best suit their particular needs.

The computing device 26 is programmed or otherwise configured to process data from the event camera 22 for monitoring the vicinity of the host 24 that corresponds to a field of view 28 of the event camera 22. Monitoring the vicinity or field of view includes monitoring any objects within the field of view 28. For discussion purposes, Figure 1 includes a single object 30, which is an individual person, within the field of view 28. The object 30 is referred to in this description for discussion purposes without limiting the manner in which the disclosed system and method can be used. For example, there may be more than one object, a variety of different types of objects, or no objects within the field of view 28 and the disclosed method is useful in all such situations.

Monitoring the object 30 includes at least one determination regarding the object 30. Example determinations include detecting the presence of the object 30, locating the object relative to the event camera 22 or host 24, tracking relative movement between the object 30 and the event camera 22 or host 24, classifying the object 30, identifying the object 30, or a combination of such determinations.

The computing device 26 is configured to use the data from the event camera 22 directly for monitoring the object 30. Figure 2 is a flowchart diagram 40 that summarizes an example technique. At 42, the computing device 26 obtains data from the event camera 22 at each of a plurality of time instances. The data from the event camera 22 at each time instance includes an output from each of the camera pixels. Each pixel output indicates whether an event occurs at each pixel. The data from the event camera 22 includes a plurality of events when the object 30 is within the field of view 28 because the object 30 introduces differences in illumination detected by the pixels. At 44, the computing device 26 determines a temporally regularized optical flow velocity for each of the pixels at each time instance. The computing device determines an optical flow and correspondence of at least one feature of the object 30 based on the temporally regularized optical flow velocities at a selected time instance and a subsequent time instance at 46. The feature of the object 30 corresponds to at least one of the events at the selected time instance and at least one of the events at the subsequent time instance. Determining the optical flow and correspondence of all detected features of the object 30 allows for monitoring the entire object 30.

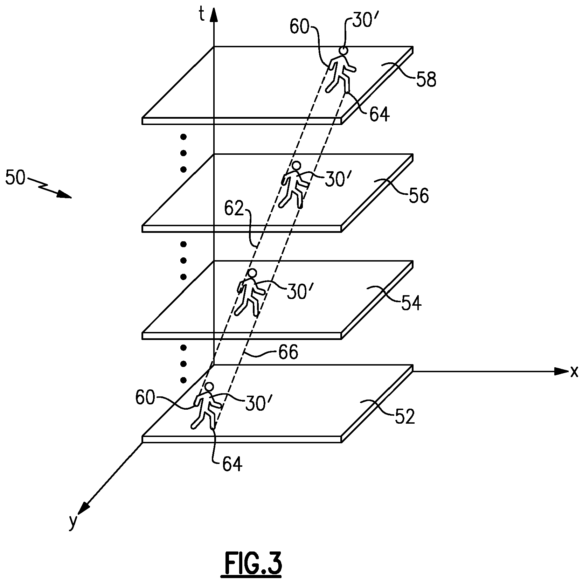

Figure 3 schematically illustrates an example optical flow of the object 30. The data provided by the event camera 22 is schematically shown at 50 to represent how the data corresponds to time and space. The pixel outputs at each of a plurality of the time instances are shown at 52, 54, 56, and 58. The pixel outputs, which correspond to the field of view 28, are shown with respect to a two-dimensional space having x and y axes. The progression along the time axis t (moving upward according to the drawing) indicates how the data from the event camera 22 includes information regarding changes in that which is detected by the event camera 22 over time.

In this example, an appearance 30' of the object 30 is in different locations within the field of view 28 because there is relative movement between the object appearance 30 and the event camera 22. Such relative movement may be the result of the object 30 moving while the event camera 22 is stationary, the event camera 22 (and the host 24) moving while the object 30 is stationary, or simultaneous movement of the object 30 and the event camera 22. Depending on the location of the object 30 within the field of view 28 at a time instance, the outputs of different pixels of the event camera 22 indicate events corresponding to features of the object 30.

The object 30 can be monitored by determining the optical flow of at least some of the features of the object appearance 30'. The optical flow of the entire object appearance 30' may be useful when sufficient data is available to make such determinations. For discussion purposes, two features of the object appearance 30' are indicated in Figure 3. For example, one feature 60 corresponds to one hand of the individual 30. As can be appreciated from the illustration, the feature 60 appears in different locations within the event camera data at the illustrated time instances 52-58. The optical flow of the feature 60 corresponds to the relative movement between the feature 60 and the event camera 22.

The computing device 26 determines the temporally regularized optical flow velocities of the pixels that indicate an event at each of the time instances shown at 52-58. At least one of those determined velocities corresponds to the feature 60. In many situations multiple pixels and associated velocities correspond to a detected feature at each time instance. The predetermined relationship between the temporally regularized optical flow velocities minimizes changes between those velocities from time instance to time instance (e.g., from the time instance represented at 52 and the time instance represented at 58) and the computing device 26 determines the optical flow of the feature 60 as schematically represented at 62. In other words, the predetermined relationship between the temporally regularized optical flow velocities smooths the curve shown at 62.

Another feature 64 of the object appearance 30', such as a foot of the individual, has an optical flow represented at 66. The computing device 26 uses the temporally regularized optical flow velocities of the pixels indicating events corresponding to the feature 64 and the predetermined relationship to determine the optical flow in a manner that smooths the curve 66.

An example embodiment of a method used to determine the optical flow of a monitored object, such as the object 30, includes a regularizer that enforces regularity along the velocity field.

The following definitions and assumptions apply:

Let $e : [0, T] \times \Omega \to \{-1,0,1\}$ where $\Omega \subseteq \mathbb{R}^2$ be the event stream represented as a continuum function.

Let $v : [0,T] \times \Omega \to \mathbb{R}^2$ denote the optical flow at each time.

Let $\phi : [0, T] \times \Omega \to \Omega$ denote the mapping (warp) between time 0 and all time $t$.

Let $\dfrac{\partial}{\partial t}$ denote the partial w.r.t $t$ and $\nabla$ denote the spatial gradient.

where $\Omega$ indicates the pixels of the event camera imaging plane, and $\mathbb{R}^2$ indicates the real plane.

The brightness or event constancy can be represented using the classical differential form, which is

$$\frac{\partial e}{\partial t}(t, x) + \nabla e(t, x) \cdot v(t, x) = 0.$$

The regularizer limits or minimizes changes in velocity along paths $t$ - $\phi(t, x)$. Differentiating $\dfrac{\partial}{\partial t} v\big(t, \phi(t, x)\big)$ yields:

$$\frac{\partial v}{\partial t}(t, x) + \nabla v(t, x) \cdot v(t, x) \approx 0$$

This example embodiment includes using the following variational problem or loss function to determine the optical flow velocity $v$:

$$E(v) = \int_0^T \int_\Omega (\partial_t e + \nabla e \cdot v)^2 \, \mathrm{d}x \, \mathrm{d}t + \alpha \int_0^T \int_\Omega |\partial_t v + \nabla v \cdot v|^2 \, \mathrm{d}x \, \mathrm{d}t.$$

where $(\partial_t e + \nabla e \cdot v)^2 \, \mathrm{d}x \, \mathrm{d}t$: is the event constancy term,
$|\partial_t v + \nabla v \cdot v|^2 \, \mathrm{d}x \, \mathrm{d}t$ is the temporal regularizer term, and $\alpha$ is a regularization parameter.

The computing device 26 determines the value of v that minimizes the above loss function to determine the temporally regularized optical flow velocity of each event at each time instance. An example embodiment includes a gradient descent technique to minimize the loss function including computing the variation:

$$\delta E \cdot \delta v = \int_0^T \int_\Omega 2(\partial_t e + \nabla e \cdot v)\nabla e \cdot \delta v \, dx \, dt$$

$$+ \alpha \int_0^T \int_\Omega 2(\partial_t v + \nabla v \cdot v) \cdot [\partial_t(\delta v) + \nabla(\delta v) \cdot v + \nabla v \cdot \delta v] \, dx \, dt$$

$$= \int_0^T \int_\Omega 2(\partial_t e + \nabla e \cdot v)\nabla e \cdot \delta v \, dx \, dt$$

$$+ \alpha \int_0^T \int_\Omega 2(\partial_t v + \nabla v \cdot v) \cdot [\partial_t(\delta v) + \nabla(\delta v \cdot v)] dx \, dt,$$

where the last line includes

$$\nabla[\delta v \cdot v] = D(\delta v)v + (Dv)\delta v.$$

Applying integration by parts to isolate $\alpha v$ includes letting

$$F := \partial_t v + \nabla v \cdot v.$$

Then

$$\delta E \cdot \delta v = \int_0^T \int_\Omega 2(\partial_t e + \nabla e \cdot v)\nabla e \cdot \delta v \, dx \, dt$$

$$- 2\alpha \int_0^T \int_\Omega (\partial_t F + \mathrm{div}(F)v) \cdot \delta v \, dx \, dt$$

$$+ 2\alpha \int_0^T \int_{\partial\Omega} (F \cdot N)v \cdot \delta v \, ds \, dt + 2\alpha \int_\Omega F \cdot \delta v \, dx \Big|_{t=0}^{t=T}$$

where N is the unit normal to $\delta\Omega$.
The gradient of E can therefore be expressed as:

$$\nabla E(v) = (\partial_t e + \nabla e \cdot v)\nabla e - \alpha[\partial_t F + \mathrm{div}(F)v]$$

With $\bar{v} := (1, v)$ and $\mathbf{D} = (\partial_t, \nabla)$ it is possible to write F as:

$$F = (\mathbf{D}v)\bar{v}$$

It follows that the gradient of E can be expressed as:

$$\nabla E(v) = (\partial_t e + \nabla e \cdot v)\nabla e - \alpha[\partial_t((\mathbf{D}v)\bar{v}) + \mathrm{div}((\mathbf{D}v)\bar{v})v].$$

This example embodiment includes eliminating boundary terms from the loss function by applying the following boundary conditions:

$$(\mathbf{D}v)\bar{v} \cdot N = 0, \quad \text{on } \partial\Omega$$

$$(\mathbf{D}v)\bar{v} = 0, \quad \text{on } \{0, T\} \times \Omega,$$

which implies that the velocity is constant along paths across the boundary.

Writing all the equations to compute the gradient:

$$\nabla E(v) = (\partial_t e + \nabla e \cdot v)\nabla e - \alpha[\partial_t((\mathbf{D}v)\bar{v}) + \text{div}((\mathbf{D}v)\bar{v})v] \text{ on } (0, T) \times \Omega$$

$$(\mathbf{D}v)\bar{v} \cdot N = 0, \text{ on } \partial\Omega$$

$$(\mathbf{D}v)\bar{v} = 0, \text{ on } \{0, T\} \times \Omega.$$

The gradient descent PDE can therefore be expressed as

$$\partial_\tau v = -(\partial_t e + \nabla e \cdot v)\nabla e + \alpha[\partial_t((\mathbf{D}v)\bar{v}) + \text{div}((\mathbf{D}v)\bar{v})v],$$

where $\tau$ indicates the evolution parameter. Gradient descent is known to have slow convergence and be prone to local minimizers. To alleviate this, the computing device 26 is configured to use a known accelerated optimization resulting in

$$\partial_\tau^2 v + a\,\partial_\tau v = -(\partial_t e + \nabla e \cdot v)\nabla e + \alpha[\partial_t((\mathbf{D}v)\bar{v}) + \text{div}((\mathbf{D}v)\bar{v})v],$$

where $a > 0$ is a damping factor.

According to an example embodiment, the regularizer can be expressed in $x$ and $y$ components. Using $v = (v_1, v_2)^T$, then

$$(\mathbf{D}v)\bar{v} = \begin{pmatrix} (\mathbf{D}v_1)\bar{v} \\ (\mathbf{D}v_2)\bar{v} \end{pmatrix}.$$

Deriving the first term of the regularizer yields

$$E_{reg}(v) = \int_{T \times \Omega} [(\mathbf{D}v_1)\bar{v}]^2 \, \mathrm{d}x \, \mathrm{d}t.$$

and it follows that

$$\begin{aligned} \delta E_{reg}(v) \cdot \delta v &= 2\int_{T \times \Omega} [(\mathbf{D}v_1)\bar{v}] \cdot [(\mathbf{D}\delta v_1)\bar{v} + (\mathbf{D}v_1)\delta\bar{v}]\mathrm{d}x \, \mathrm{d}t \\ &= 2\int_{T \times \Omega} [(\mathbf{D}v_1)\bar{v}]\bar{v} \cdot \overline{\nabla}(\delta v_1) + [(\mathbf{D}v_1)\bar{v}](\mathbf{D}v_1)\delta\bar{v} \, \mathrm{d}x \, \mathrm{d}t \\ &= 2\int_{T \times \Omega} -\text{div}([(\mathbf{D}v_1)\bar{v}]\bar{v})\delta v_1 + [(\mathbf{D}v_1)\bar{v}](\mathbf{D}v_1)\delta\bar{v} \, \mathrm{d}x \, \mathrm{d}t \end{aligned}$$

An example embodiment includes treating the loss function E using Pytorch auto-differentiation, which is a known technique, to automatically differentiate and using standard optimizers. The energy can be expressed as

$$E(v) = \| (\mathbf{D}e)\bar{v} \|_{L^2}^2 + \alpha\|(\mathbf{D}v)\|_{L^2}^2,$$

which corresponds to the loss function

Discretizing $(\mathbf{D}e)\bar{v}$ using an upwind scheme includes

$$(\mathbf{D}e)\bar{v} = \partial_t e + v_1\,\partial_{x_1}e + v_2\,\partial_{x_2}e$$

And

$$v_j(t,x)\,\partial_{x_j}e(t,x) \approx \max\{0, v_j(t,x)\}D_j^- e(t,x) + \min\{0, v_j(t,x)\}D_j^+ e(t,x)$$

Discretizing $(\mathbf{D}v)\bar{v}$ using a technique similar to Burger's equation includes:

$$(\mathbf{D}v)\bar{v} = \begin{pmatrix} \partial_t v_1 + \dfrac{1}{2}\partial_{x_1}(v_1)^2 + v_2\,\partial_{x_2}v_1 \\ \partial_t v_2 + \dfrac{1}{2}\partial_{x_2}(v_2)^2 + v_1\,\partial_{x_1}v_2 \end{pmatrix}$$

Let's discretize

$$\partial_{x_i}(v_i)^2(t,x) \approx \frac{g\big(v_i(t,x), v_i(t,x+\Delta x_i)\big) - g(v_i(t,x-\Delta x_i), v_i(t,x))}{\Delta x_i}$$

where

$$g(u_1, u_2) = \max\{u_1, 0\}^2 + \min\{u_2, 0\}^2$$

Let discretize

$$v_j(t,x)\,\partial_{x_j}v_i(t,x) \approx \max\{v_j(t,x),0\}D_j^- v_i(t,x) + \min\{v_j(t,x),0\}D_j^+ v_i(t,x).$$

where

$$D_j^- v_i(t,x) = \frac{v_i(t,x) - v_i\big(t, x-\Delta x_j\big)}{\Delta x_j}$$

$$D_j^+ v_i(t,x) = \frac{v_i\big(t, x+\Delta x_j\big) - v_i(t,x)}{\Delta x_j}$$

A forward difference is used for the time derivatives:

$$\partial_t v_i(t,x) \approx \frac{v_i(t+\Delta t, x) - v_i(t,x)}{\Delta t}$$

Monitoring the object 30 and making determinations regarding the object 30 allows for controlling or adjusting at least one aspect of the host 24. For example, when the host 24 is a movable object, such as a vehicle, the computing device 26 provides information or control signals for controlling movement of the host 24. In some embodiments, controlling movement of a vehicle may include altering a trajectory of the vehicle for avoiding a collision with the object 30. Alternatively, the host 26 may be directed toward the object 30. If the host 24 is a stationary object, the information regarding the object 30 may be used to trigger an alarm, activate a lock, or control another feature of the host 24. Those skilled in the art who have the benefit of this description will realize how information regarding a monitored object will be useful to meet the needs of their particular situation.

Using the event data directly to determine the temporally regularized optical flow velocities and then using those to determine the optical flow of the object 30 avoids the drawbacks associated with converting event camera data into an image file and then processing such an image. The disclosed system and method provides more accuracy and accomplishes that at a lower computational expense compared to previous attempts to utilize information from an event camera for purposes such as object monitoring.

The preceding description is exemplary rather than limiting in nature. Variations and modifications to the disclosed examples may fall within the scope of the invention as defined by the claims.

**Claims**

1. A method, comprising:

   obtaining data from an event camera (22) for each of a plurality of time instances, the data including a plurality of events corresponding to changes detected by a corresponding plurality of pixels of the event camera at each time instance;
   determining temporally regularized optical flow velocities at each time instance, wherein each of the pixels has a respective one of the optical flow velocities at each time instance;
   determining an optical flow and correspondence of a feature of an object (30) in a field of view (28) of the event camera based on a predetermined relationship between the temporally regularized optical flow velocities at a selected time instance and the temporally regularized optical flow velocities at a subsequent time instance, wherein the feature of the object corresponds to one of the plurality of events at the selected time instance and one of the plurality of events at the subsequent time instance.

2. The method of claim 1, wherein the predetermined relationship minimizes a difference between the optical flow velocities along an optical flow trajectory induced by the velocity over time.

3. The method of claim 1 or 2, wherein determining the temporally regularized optical flow velocities includes determining a velocity that minimizes a loss function having an event constancy term and a temporal regularizer term.

4. The method of claim 3, wherein the temporal regularizer term includes a spatial gradient factor corresponding to a spatial gradient of the optical flow velocity.

5. The method of any preceding claim, comprising determining relative movement between the object (30) and the event camera (22) based on the determined optical flow of the feature of the object.

6. The method of claim 5, comprising

   determining the optical flow of a plurality of features of the object; and
   determining the relative movement based on the determined optical flow of the plurality of features.

7. The method of claim 5, wherein the event camera (22) is associated with a host (24) and the method includes controlling at least one aspect of the host based on the determined relative movement between the object and the event camera.

8. The method of claim 7, wherein the host comprises a vehicle and controlling at least one aspect of the host comprises automatically altering at least one aspect of movement of the vehicle.

## FIG.1

OBTAIN DATA FROM AN EVENT CAMERA
FOR A PLURALITY OF TIME INSTANCES — 42

DETERMINE TEMPORALLY REGULARIZED OPTICAL FLOW VELOCITIES FOR
EACH PIXEL OF THE EVENT CAMERA AT EACH TIME INSTANCE — 44

DETERMINE OPTICAL FLOW AND CORRESPONDENCE OF AN OBJECT
FEATURE BASED ON A PREDETERMINED RELATIONSHIP
BETWEEN THE TEMPORALLY REGULARIZED OPTICAL FLOW VELOCITIES
AT A SELECTED TIME INSTANCE AND A SUBSEQUENT TIME INSTANCE — 46

## FIG.2

**FIG.3**

Europäisches
Patentamt

European
Patent Office

Office européen
des brevets

# EUROPEAN SEARCH REPORT

Application Number

EP 23 20 9223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BARDOW PATRICK ET AL: "Simultaneous Optical Flow and Intensity Estimation from an Event Camera", 2016 IEEE CONFERENCE ON COMPUTER VISION AND PATTERN RECOGNITION (CVPR), IEEE, 27 June 2016 (2016-06-27), pages 884-892, XP033021219, DOI: 10.1109/CVPR.2016.102 [retrieved on 2016-12-09] * abstract; figure 1 * * Section 2, first paragraph * * Section 3; figure 3 * | 1-8 | INV. G06T7/246 G06T7/269 |
| X | ALEX ZIHAO ZHU ET AL: "Event-based feature tracking with probabilistic data association", 2017 IEEE INTERNATIONAL CONFERENCE ON ROBOTICS AND AUTOMATION (ICRA), 1 May 2017 (2017-05-01), pages 4465-4470, XP055532500, DOI: 10.1109/ICRA.2017.7989517 ISBN: 978-1-5090-4633-1 * abstract * * Section I.; figure 1 * * Section III. * * Section IV. * | 1-8 | |

_____

-/--

TECHNICAL FIELDS SEARCHED (IPC)

G06T

The present search report has been drawn up for all claims

| Place of search | Date of completion of the search | Examiner |
|---|---|---|
| Munich | 22 March 2024 | Salvador, Elena |

EPO FORM 1503 03.82 (P04C01)

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RYAD BENOSMAN ET AL: "Asynchronous frameless event-based optical flow", NEURAL NETWORKS, vol. 27, 25 November 2011 (2011-11-25), pages 32-37, XP055035741, ISSN: 0893-6080, DOI: 10.1016/j.neunet.2011.11.001 * Section 2.2; figure 1 * * Section 3 * * Section 4, Algorithm 1; figures 6,7 * | 1-8 | |
| A | MOHAMMED ALMATRAFI ET AL: "Distance Surface for Event-Based Optical Flow", ARXIV.ORG, CORNELL UNIVERSITY LIBRARY, 201 OLIN LIBRARY CORNELL UNIVERSITY ITHACA, NY 14853, 28 March 2020 (2020-03-28), XP081632624, * abstract * * Section 1; figure 2 * * Sections 2.1, 2.2; figure 1 * | 1-8 | TECHNICAL FIELDS SEARCHED (IPC) |

The present search report has been drawn up for all claims

| Place of search | Date of completion of the search | Examiner |
|---|---|---|
| Munich | 22 March 2024 | Salvador, Elena |

EPO FORM 1503 03.82 (P04C01)